# EUROPEAN PATENT APPLICATION

(11) **EP 4 744 490 A1**
(43) Date of publication of application: **20.05.2026**
(21) Application number: 25215234.3
(22) Date of filing: 12.11.2025
(51) Int. Cl.: A21B 3/18, B65B 61/12, B65D 3/26

(54) **AUTOMATIC FINISHING MACHINE AND METHOD FOR A BAKED FOOD PRODUCT**

(30) Priority: 14.11.2024 IT 202400025764
(71) Applicant: ALIMEC S.R.L., 36030 Valli del Pasubio (VI) (IT)
(72) Inventor: Roso, Arianna, 36036 Torrebelvicino (VI) (IT)
(74) Representative: Petraz, Gilberto Luigi

(57) **Abstract**

Machine (10) and method for the automatic finishing of a baked product (100) of the type prepared in a container (200) open upward, which comprises at least one gripping member (14) configured to selectively hold at least one lateral wall (202) of the container (200) and movable between a gripping position adjacent to the baked product (100) and a removal position spaced apart from the baked product (100).

## Description

### FIELD OF THE INVENTION

The present invention concerns an automatic finishing machine, for example installed in a packaging line, configured to automatically carry out a partial removal of a baking mold, or other paper container, used in the steps of leavening and baking a baked product, such as for example a cake, a doughnut, a panettone or other similar product, once the baking steps thereof have been completed.

The present invention also concerns the method for automatically finishing the baked product prepared in the paper container.

### BACKGROUND OF THE INVENTION

It is known that some baked products, in particular in the confectionery sector, are prepared by using a paper baking mold, that is, a container open upward and sometimes having fluted edges. It is in fact known in the sector to pour a semiliquid pastry dough into the baking mold, let the dough rise and, finally, bake it in the oven. The baked product is therefore contained, at least in its lateral part, in the baking mold in which the entire process took place. Some examples of this type of baked products can be doughnut cakes, focaccia, panettone, but also muffins or others.

It is also known that baking molds with high edges are often used in order to contain all the necessary volume of dough from which to start with the leavening and baking. In these cases, once baking is complete, the baked product is wrapped for almost the entirety of its height by the edges of the baking mold, essentially remaining almost completely laterally covered by the baking mold. This is not accepted in the packaging phase, for both cosmetic reasons of product visibility as well as practical reasons of removing the product from its containing element.

For this reason, once baking has ended and before packaging, each baked product is finished manually by removing an upper circular portion of the lateral wall of each baking mold.

It is clear that such a manual operation, especially when transferred to industrial productions on the order of hundreds or thousands of products per hour, leads to a significant increase in the overall time of the production chain and, in particular, the packaging, of the baked products, resulting in increases in the costs of managing the operating lines and equipment.

In addition, the manual finishing intervention on the baked products made also has a bottleneck effect on the nominal productivity of the connected industrial lines, both for cooking and also packaging, requiring coordinated production slowdowns or the need to provide parking or buffer areas in which the baked products temporarily lie before being manually finished one by one.

An additional drawback is the fact that, by its very nature, the manual intervention produces removals that are always different, even if by small deviations, which can lead to a high number of aesthetic non-conformities of the product and consequent rejection thereof, resulting in loss of profit. In addition, given the repeatability of the operation, the product can be damaged by removing parts of it together with the upper edge of the baking mold, leading to a possible aesthetic deterioration of the product itself.

CN117256638 A discloses a device for automatically extracting a baked product from a container having a mold function by overturning the mold. This document does not provide to remove an upper portion of the container leaving the product inside the mold.

CN 106274018 A and CN 221138993 U disclose devices for the automatic removal of a film from a mobile phone.

CN 206087482 U concerns a tool for gripping a jerry can for packaging purposes.

The technical field of these documents, the function and the problems addressed by the devices described therein are far from the purposes and functions of the present invention described below.

One purpose of the present invention is to provide a machine that allows to remove the upper portion of the baking mold in a substantially automated manner, respecting the production times for both the baking and also the industrial packaging of the baked products.

Another purpose of the present invention is to provide an automatic machine for finishing baked products that guarantees a high qualitative repeatability of the finishing performed, limiting any non-conformities and production waste to a minimum.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes and to solve the technical problem described above in a new and original way, also achieving considerable advantages compared to the state of the prior art, a machine and a method according to the present invention find application for the automatic finishing of a baked product of the type prepared in a container, or baking mold, open upward, such as for example a cake, a doughnut, a panettone or other, the final conformation of which, that is, the conformation at the end of the cooking steps, is such that it appears as a baked product contained, at least in its lower lateral part, in the baking mold.

The automatic machine according to the present invention comprises at least one gripping member, which is configured to selectively hold at least one lateral wall of the baking mold, and which is movable between a gripping position adjacent to the baked product and a removal position spaced apart from the baked product.

In this way, an upper portion of the baking mold can be held and removed, in an essentially automated manner, through the mechanical action of the gripping member which, by acting on the lateral wall of the baking mold, removes the upper portion from the baked product.

The baking mold is of the type provided with a predefined preferential breaking segment, provided for example circularly at a specific height of the lateral wall, so as to remove only an upper portion, with a desired height, of the lateral wall.

In this way, the automated action of gripping and movement of the lateral wall causes a radial traction of the lateral wall, resulting in a guided breaking along the preferential breaking line provided.

This action therefore determines a desired removal of only the upper portion of the baking mold and, consequently, an automatic finishing of the baked product, within operating times that can respect the production times for both the baking and also the industrial packaging of the baked products.

Furthermore, the solution according to the present invention, by acting on the lateral wall of the baking mold in an automated manner, is simple and economical to produce, and also guarantees a high qualitative repeatability of the finishing performed, limiting any non-conformities and production waste to a minimum.

In accordance with another aspect of the present invention, the machine comprises at least one movement member, which is disposed in cooperation with the baked product and is configured to move the latter in coordination with the movement of the gripping member, between the gripping position and the removal position.

In this way, the removal action of the gripping member is substantially accompanied and promoted by the coordinated movement of the baked product implemented by the movement member, to the benefit of both the precision of the removal of the upper portion of the baking mold and also the operating times required for the removal.

In other advantageous embodiments, two or more gripping members with corresponding two or more movement members can be provided in parallel, in order to adapt the productivity of the machine according to the present invention to the nominal productivity of the baking and packaging machines provided upstream and, respectively, downstream of the finishing machine according to the present invention.

It is not excluded that the machine according to the present invention could be integrated into a larger packaging line, as well as according to other integrative operating solutions, depending on production and installation plant requirements.

In accordance with another aspect of the present invention, the gripping member can comprise at least one suction element configured to at least partly detach the lateral wall of the baking mold from the baked product, before the removal action is performed.

In accordance with another aspect of the present invention, the gripping member can also comprise at least one gripper element configured to be inserted between the lateral wall of the baking mold and the baked product, for example in the hollow space defined by the suction element's action, and selectively hold the lateral wall at least between the gripping position and the removal position. This guarantees the cooperation of the gripping member with the lateral wall, for the entire duration of the removal action.

In an advantageous solution of the machine according to the present invention, the gripping member can comprise at least one blower element, which is disposed in operating cooperation with the gripper element and is configured to selectively emit a blast of air toward the lateral wall. By doing so, at the end of the removal of the baking mold's upper portion, it is possible to facilitate the waste removal operations by making the gripper element ready to operate in a following removal step.

In accordance with another aspect of the present invention, the movement member comprises at least one rotating device, which is configured to rotate the baked product at an angular speed which is coordinated with the translation speed of the gripping member between the gripping position and the removal position.

Advantageously, in solutions in which the baked product, and therefore the baking mold, has a doughnut-like conformation, that is, provided with a central hole, the rotating device can comprise a rotation cone configured to enter the central hole and rotate the baked product at the aforementioned rotation speed.

In other advantageous solutions of the present invention, the movement member comprises, or is associated with, at least one detection element, such as a viewer, a position transducer or other, which is disposed and configured so as to identify and detect a corresponding identification reference of the baking mold, in order to define a desired angular positioning of the baked product. This allows to position the baked product in the correct angular position provided for the removal of the upper portion of the baking mold, for example, in proximity to the zone where the flaps of the baking mold are glued together.

In a preferred solution, the correct angular position of the baked product provides the positioning a pre-cut in correspondence with the gripping position of the gripping member, thus facilitating the removal operation.

This particular solution also allows, in particular but not limited to, in solutions which provide a plurality of gripping members and movement members in parallel, to coordinate the angular position of all the baked products being fed, preventing any removal asynchronies between different baked products.

Advantageously, the detection of the position of the reference element on the baking mold is followed by an action of rotation of the rotating devices so that all the baked products are presented to the corresponding gripping members with a coordinated and correct angular orientation.

In accordance with a further aspect of the present invention, the machine comprises at least one support frame, which is configured to house at least the gripping member and the movement member. Solutions in which the frame is configured to also operationally support means for feeding the baked products, as well as for evacuating both the finished baked products and also the waste resulting from the finishing, are not excluded.

### DESCRIPTION OF THE DRAWINGS

These and other aspects, characteristics and advantages of the present invention will become apparent from the following description of an embodiment, given as a non-restrictive example with reference to the attached drawings wherein:
- fig. 1 is a schematic plan view of an automatic finishing machine for a baked product, according to the present invention, in a first operating condition;
- fig. 2 is a schematic plan view of the automatic finishing machine of fig. 1, in a second operating condition;
- fig. 3 is a schematic section view along line III-III of fig. 2;
- fig. 3a schematically shows a baked product from a lateral and bottom view thereof;

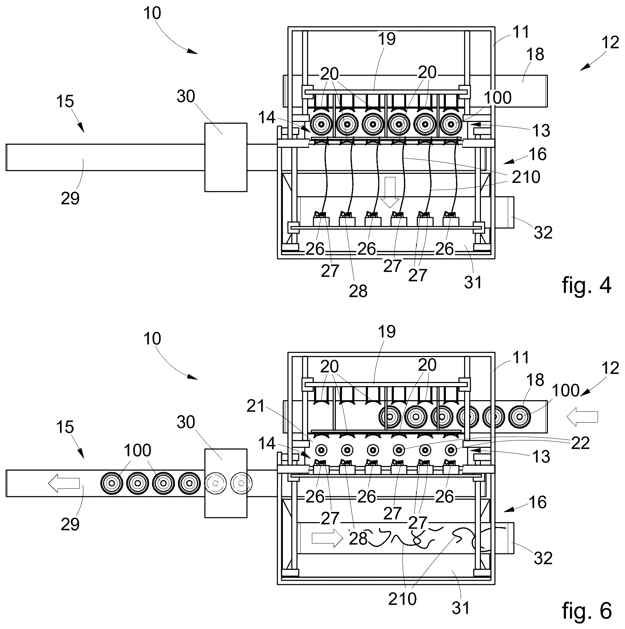

- fig. 4 is a schematic plan view of the automatic finishing machine of fig. 1, in a third operating condition;

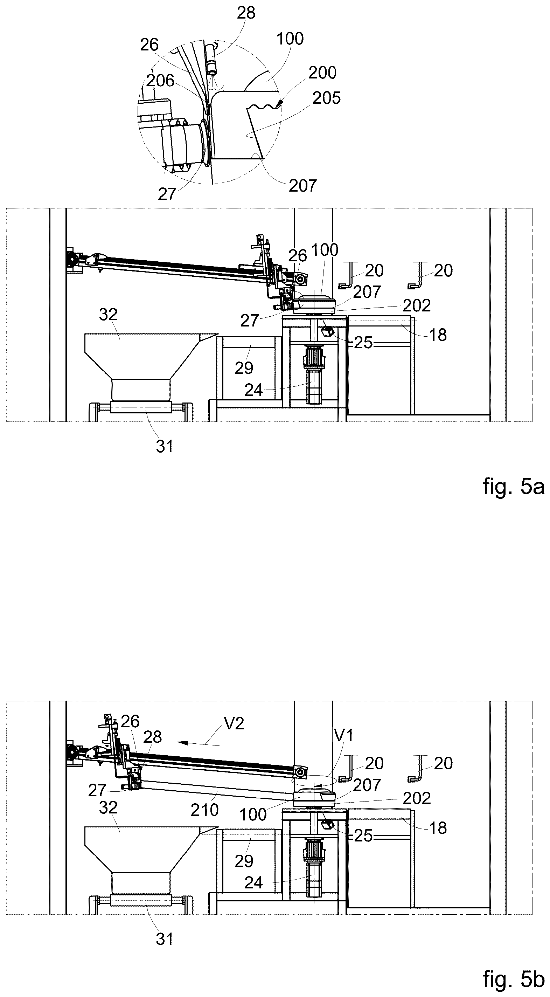

- fig. 5a is a section view of the machine of fig. 4 along line V-V, in a first work position;
- fig. 5b is a section view of the machine of fig. 4 along line V-V, in a second work position; and
- fig. 6 is a schematic plan view of the automatic finishing machine of fig. 1, in a fourth operating condition.

We must clarify that the phraseology and terminology used in the present description, as well as the figures in the attached drawings also in relation as to how described, have the sole function of better illustrating and explaining the present invention, their purpose being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF AN EMBODIMENT OF THE PRESENT INVENTION

With reference to the attached drawings, a machine 10 according to the present invention is applied to finish a baked food product, in this specific case a doughnut 100, without excluding that the machine 10 can be equipped to operate on other baked food products such as, for example, cakes, focaccia, panettone or other.

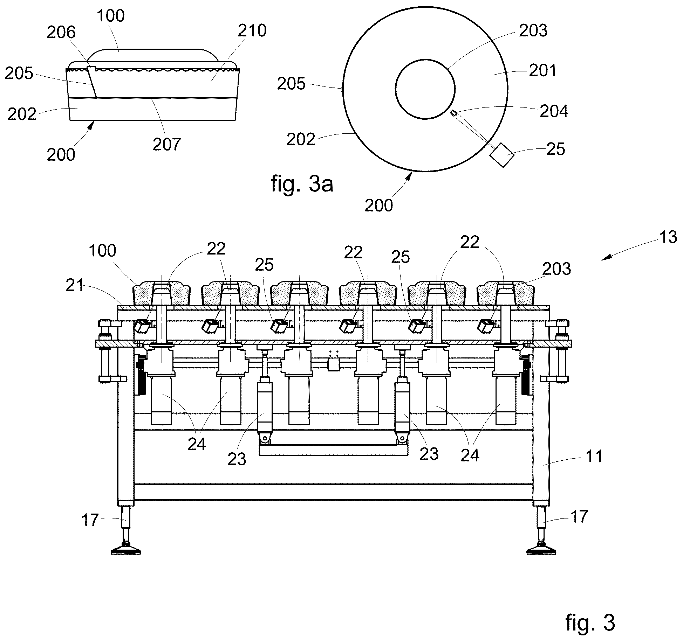

The doughnut 100, as well as any other type of baked products, are of the type prepared from a pastry dough placed in a paper container, or baking mold 200, (see fig. 3a) inside which the dough is made to rise and then baked.

The baking mold 200 substantially consists of a circular base 201 and a lateral wall 202, for example fluted, extending from the circular base 201 and having a height such as to completely contain the starting dough.

In this specific case, the circular base 201 comprises a central hole from which a central wall 203 extends, so as to define the characteristic shape of the doughnut 100, and has at least one angular reference 204, such as for example a colored segment, or a segment of a different material, or an incision, a hole, or any other identification element, the functions of which will be explained in detail below.

The lateral wall 202 is substantially made by means of a paper strip wrapped around the perimeter edge of the circular base 201, and it can have a substantially vertical connection edge 205, one flap 206 of which is substantially protruding with respect to the rest. The flap 206 may also not be present and/or be associated with a pre-cut or incision.

Advantageously, on the lateral wall 202 there is created, along its entire length, a preferential breaking segment 207 that defines a lower part of the lateral wall 202 itself and an upper portion of a desired height.

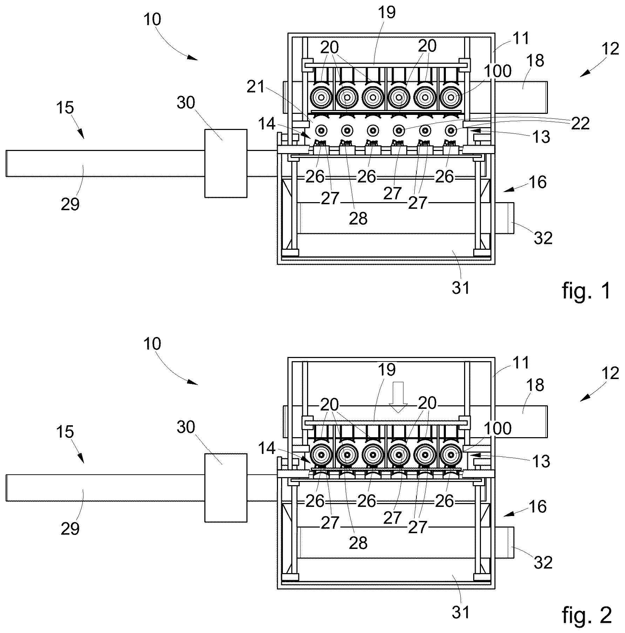

The machine 10 according to the present invention (fig. 1) essentially comprises a support frame 11 with respect to which a feeding unit 12, a movement member 13, a gripping member 14, an evacuation unit 15 and a waste unit 16 are operationally mounted.

The support frame 11 consists of a plurality of uprights and load bearing elements, made of metal material, which are disposed in cooperation with each other both to reciprocally support the operating parts (12, 13, 14, 15 and 16), and also to give the machine structure. Advantageously, the support frame 11 provides a plurality of levelling feet 17, for example of the adjustable type, which are configured to allow to position the support frame 11 correctly, or a plurality of pivoting casters, of a substantially known type and not shown in the accompanying drawings, which, as an alternative to the levelling feet 17, allow the selective displacement of the machine 10, thus allowing for maintenance and cleaning of the machine 10, as well as facilitating its customized positioning within a more complex packaging and/or production line of the doughnuts 100, even already existing.

The feeding unit 12 comprises a first feeding belt 18 suitable to load, in this specific case, six doughnuts 100 at a time disposed at a certain pitch, and a movable arm 19 provided with two series of shaped manipulators 20, movable simultaneously in order to take six doughnuts 100 from the feeding belt 18 to the movement member 13 and, simultaneously, another six doughnuts 100, already finished, from the movement member 13 to the evacuation unit 15. This advantageous solution allows to optimize the times for feeding and finishing the doughnuts 100. However, simplified solutions with a single series of shaped manipulators 20 are not excluded, as well as solutions that allow to manage any number of doughnuts 100 whatsoever simultaneously.

The movement member 13 substantially comprises a fixed operating plane 21 on which the six doughnuts 100 are positioned by the shaped manipulators 20, and corresponding six rotating cones 22 selectively movable by means of actuators 23 between a resting position lower than the operating plane 21 and an operating position protruding orthogonally to the operating plane 21. Each rotating cone 22 has a conformation such as to cooperate with the central wall 203 of the baking mold 200 and is selectively rotated by means of a corresponding electric actuator 24.

Also part of the movement member 13 are corresponding photocells 25 disposed in such a way as to sight a corresponding circular base 201 of the baking mold 200 and identify its angular reference 204, so as to detect the angular condition of the doughnut 100, and in particular of the baking mold 200, being fed. Advantageously, each photocell 25 is connected to the corresponding electric actuator 24, so as to determine a coordinated rotation of the rotating cone 22 and deliberately orient the doughnut 100, and in particular the baking mold 200. By doing so, all the six doughnuts 100 being fed are presented with the connection edge 205, and in particular the flap 206, operatively oriented in a manner benefiting the gripping member 14.

Furthermore, the rotation action actuated by the rotating cones 22 also has an active function during the operations of partial removal of an upper portion of the lateral wall 202 of the baking mold 200, making the doughnut 100 rotate at a desired angular speed V1, as will be explained in detail below.

According to some operating variants, the action of each rotating cone 22, during the operations of partial removal of the lateral wall 202 of the baking mold 200, can be of a passive type, that is, acting as an idle guide to the rotation induced by the action of the gripping member 14.

According to other variants, not shown, for example applied to baked food products without a central hole, such as focaccia or suchlike, a rotating plate can be provided instead of the rotating cone 22, advantageously provided with radial containing elements which act on the lateral wall 202 and allow to manage the desired angular rotation of the food product, at least in the operations of angular alignment of each product, or even during the operations of partial removal of the lateral wall 202 of the baking mold 200.

The gripping member 14 substantially comprises six grippers 26, of a pneumatic type, configured so that at least a part thereof can be inserted between the lateral wall 202 of the baking mold 200 and the lateral wall of the doughnut 100, thus being able to grip the flap 206 of the connection edge 205.

Each gripper 26 is movable, together with the others, at a certain translation speed V2 with respect to the frame 11, so as to be able to selectively assume a gripping position adjacent to the doughnut 100 and a removal position spaced apart from the doughnut 100. This movement, together with the maintenance of the gripping action on the flap 206, determines a radial traction of the lateral wall 202 of the baking mold 200. The presence of the preferential breaking segment 207 causes the lateral wall 202 to be progressively divided precisely in correspondence with the preferential breaking segment 207, thus producing a waste strip consisting of the upper portion 210 of the baking mold, thus finishing the external height of the baking mold 200. Each gripper 26 can be independently adjusted in height to manage any differences between the doughnuts 100.

Advantageously, coordinating the angular speed V1 with the translation speed V2 guarantees a perfect and repeatable progressive division of the lateral wall 202, to the advantage of the quality of the automatic operation thus performed.

The gripping member 14 also comprises, for each gripper 26, two corresponding suckers 27, which act on the lateral wall 202 in proximity to the connection edge 205, so as to space apart the lateral wall 202 from the doughnut 100 and define a hollow space for the facilitated insertion of the gripper 26. This so as to prevent the gripper 26 from damaging the lateral wall of the doughnut 100, damaging its aesthetic appearance. In the schematized embodiment, corresponding blower elements, or blowing nozzles 28, are also part of the gripping member 14, with the function of removing the removed upper portion 210 that can remain attached to the corresponding gripper 26 at the end of the progressive separation.

The evacuation unit 15 is disposed operatively downstream of the movement member 13 and of the gripping member 14, and comprises a conveyor belt 29, which can be movable vertically with respect to the operating plane 21, to prevent the grippers 26 from coming into contact with the doughnuts 100 during the progressive removal of the upper portion 210.

Advantageously, the evacuation unit 15 can comprise a selection device 30, which essentially consists of an optical detector and a pneumatic ejector, of a substantially known type and not shown in detail, which, respectively, detect the portion of the baking mold 200 that is remaining and, in the event a non-conformity is detected, eject the non-conforming doughnuts 100 from the conveyor belt 29, preventing them from being fed to the packaging station, or other subsequent operating stations.

The waste unit 16 is located in a position substantially parallel to the evacuation unit and comprises a collection hopper 31 and a conveyor belt 32, which are suitable to collect and, respectively, evacuate the removed upper portions 210 deriving from the joint operation of the movement member 13 and the gripping member 14.

It is clear that modifications and/or additions of parts may be made to the machine 10 and to the method as described heretofore, without thereby departing from the field and scope of the present invention, as defined by the claims.

It is also clear that, although the present invention has been described with reference to some specific examples, a person of skill in the art will be able to achieve other equivalent forms of machine and method for the automatic finishing of a baked food product, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Machine (10) for the automatic finishing of a baked product (100) of the type prepared in a container (200) open upward, **characterized in that** it comprises at least one gripping member (14) configured to selectively hold at least one upper portion (210), having a predefined preferential breaking segment, of a lateral wall (202) of said container (200) and movable between a gripping position adjacent to said baked product (100) and a position of removal of said upper portion (210) spaced apart from said baked product (100), and a movement member (13) disposed in cooperation with said baked product (100) and configured to move said baked product (100) in rotation, in coordination with the movement of said gripping member (14) between said gripping position and said removal position, thus allowing the removal of said upper portion (210) of the container (200).

2. Machine (10) as in claim 1, **characterized in that** said gripping member (14) comprises at least one gripper element (26) configured to selectively hold said upper portion (210) of the lateral wall (202) at least between said gripping position and said removal position.

3. Machine (10) as in one or other of the previous claims, **characterized in that** said gripping member (14) comprises at least one suction element (27) configured to at least partly move said upper portion (210) of the lateral wall (202) away from said baked product (100).

4. Machine (10) as in claim 2 or 3, **characterized in that** said gripping member (14) comprises at least one blower element (28) disposed in cooperation with said gripper element (26) and configured to selectively emit a blast of air to remove said upper portion (210) removed by said gripper element (26).

5. Machine (10) as in one or other of the previous claims, **characterized in that** said movement member (13) comprises at least one rotating device (22) configured to house and rotate said baked product (100) at an angular speed (V1) which is coordinated with a translation speed (V2) defined by said gripping member (14) at least between said gripping position and said removal position.

6. Machine (10) as in claim 5, wherein said container (200) comprises a central wall (203), **characterized in that** said rotating device comprises a rotation cone (22) configured to axially cooperate with said central wall (203) to rotate said baked product (100) at said angular speed (V1).

7. Machine (10) as in one or other of the previous claims, **characterized in that** said movement member (14) comprises at least one detection element (25) disposed and configured in such a way as to identify and detect a corresponding identification reference (204) of said container (200), in order to define a desired angular positioning of said baked product (100).

8. Machine (10) as in one or other of the previous claims, **characterized in that** it comprises at least one support frame (11) configured to reciprocally house at least said gripping member (14) and at least said movement member (13).

9. Method for automatically finishing a baked product (100) of the type prepared in a container (200) open upward, **characterized in that** it comprises at least one step of partial removal of said container (200), wherein a gripping member (14) is configured to selectively hold at least one upper portion (210), having a predefined preferential breaking segment, of a lateral wall (202) of said container (200) and is moved in rotation between a gripping position adjacent to said baked product (100) and a removal position spaced apart from said baked product (100).
